# EUROPÄISCHE PATENTSCHRIFT

(11) **EP 2 467 625 B1**
(45) Veröffentlichungstag und Bekanntmachung des Hinweises auf die Patenterteilung: **17.07.2013**
(21) Anmeldenummer: 10737861.4
(22) Anmeldetag: 22.07.2010
(51) Int. Cl.: F16H 63/30

(54) **ANORDNUNG ZUR LAGERUNG EINER SCHALTSCHIENE**
BEARING ARRANGEMENT FOR A SHIFT SHAFT
AGENCEMENT DE PALIER D'UNE TIGE DE COMMANDE

(30) Priorität: 18.08.2009 DE 102009037867
(43) Veröffentlichungstag der Anmeldung: 27.06.2012
(73) Patentinhaber: Schaeffler Technologies AG & Co. KG, 91074 Herzogenaurach (DE)
(72) Erfinder: IBERT, Lasse, 90409 Nürnberg (DE)
(86) Internationale Anmeldenummer: PCT/EP2010/060630
(87) Internationale Veröffentlichungsnummer: WO 2011/020674

(56) Entgegenhaltungen:
- EP-A1- 1 548 333
- EP-A2- 1 152 174
- DE-A1-102006 006 615
- DE-A1-102007 016 751

## Beschreibung

### Gebiet der Erfindung

Die Erfindung betrifft eine Anordnung zur Bestimmung von Positionen zweier Maschinenteile, die zueinander beweglich sind, wobei am zweiten Maschinenteil ein Sensor angeordnet ist und zwischen dem Sensor (12) und dem ersten Maschinenteil (3, 4) ein auf den Sensor (12) einwirkendes Federelement (7) angeordnet ist.

### Hintergrund der Erfindung

Eine derartige Anordnung ist beispielsweise als eine in einem Schaltgetriebe eines Kraftfahrzeugs gelagerte Schaltschiene realisiert. Bei einem Schaltgetriebe kann die Schaltschiene entlang ihrer Längsachse zwischen mindestens zwei axial benachbarten Positionen verschoben werden. Bei zwei Positionen entspricht beispielsweise eine erste Position einer Neutralposition und eine zweite Position einem eingelegten Gang. Gleichzeitig mit der Schaltschiene wird in der Regel ein daran befestigtes Schaltelement zwischen diesen Positionen verschoben. Bei dem Schaltelement handelt es sich insbesondere um eine Schaltgabel oder einen Schaltfinger. Dabei erfolgt über das Schaltelement und über weitere Zwischenelemente, wie beispielsweise eine Schaltmuffe, eine Schaltung des zur Bildung einer Übersetzungsstufe erforderlichen Zahnradsatzes.

Um die Schaltung weiterer Gänge zu ermöglichen, ist es bekannt, eine Anzahl von Schaltschienen vorzusehen, die parallel zueinander angeordnet sind. Um das gleichzeitige Einlegen von zwei Gängen zu verhindern, ist es bei einem Schaltgetriebe mit mehreren Schaltschienen erforderlich, dass sich bei einem Gangwechsel alle Schaltschienen bis auf maximal eine in ihrer Neutralposition befinden. Darum ist es beispielsweise bei automatischen oder halbautomatischen Schaltgetrieben wichtig, die Position der Schaltschiene und des Schaltelements, z.B. der Schaltgabel oder des Schaltfingers zu kennen. Zunehmend ist eine Kenntnis des eingelegten Gangs auch für eine Adaptierung des Motorkennfeldes erforderlich.

DE 42 23 718 A1 betrifft eine Vorrichtung zur Erfassung der Gangstellung eines Schaltgetriebes. Zur Vermeidung von Fehldetektionen aufgrund von Ungenauigkeiten, die einerseits aufgrund der räumlichen Trennung der Gangerkennung und der Getriebeelemente auftreten, andererseits auf Temperaturwechsel und Erschütterungen zurückzuführen sind, schlägt DE 42 23 718 A1 hierzu eine Anordnung von magnetisch empfindlichen Reed-Sensoren vor, die im Bewegungsbereich eines Permanentmagneten angeordnet sind. Zur Abschirmung zwischen den Magnetpositionen und den Reed-Schaltern sind Blenden aus abschirmendem Material angeordnet. Derartige Blenden bewirken eine Verringerung des Einflusses von durch benachbarte Magnete erzeugten Störfeldern, so dass empfindlichere Sensoren verwendbar sind, um die Gangerkennung zu verbessern. Die Blendenkonstruktion ist jedoch aufwendig. Ferner kann sich während der Betriebsdauer das Detektionsverhalten verschlechtern, falls Metallabrieb von den Magneten angezogen wird und deren Magnetfelder verfälscht.

DE 10 2004 053 205 A1 schlägt eine druckmittelbetätigte Schaltvorrichtung vor, bei der zur Positionsbestimmung der Schaltschiene bzw. einer Schaltstange Positionssensoren vorgesehen sind. In der DE 10 2004 053 205 A1 ist die Schaltstange zumindest teilweise hohl ausgeführt und es ist insbesondere ein zylindrischer Hydraulikeinsatz vorgesehen, welcher in die hohl ausgeführte Schaltstange eingreift und auf dem die Schaltstange bei einem Schaltvorgang verschoben wird. Die Positionssensoren sind hierbei zwischen dem zylindrischen Hydraulikeinsatz und der darauf befindlichen Schaltstange angebracht. Nachteiligerweise ist die in der DE 10 2004 053 205 A1 vorgeschlagene Positionsbestimmung der Schaltstange im Wesentlichen nur für druckmittelbetätigte Schaltvorrichtungen geeignet, die aufgrund des Hydraulikeinsatzes ebenfalls aufwendig herzustellen ist.

Weitere Anordnungen für ein Zahnräderwechselgetriebe sind in DE 10 2006 006 615 A1, in der gattungsgemäßen EP 1 152 174 A1 und in DE 10 2007 016 751 A1 offenbart.

### Aufgabe der Erfindung

Ausgehend vom Stand der Technik liegt der Erfindung die Aufgabe zugrunde, eine Anordnung zur Positionsbestimmung eines ersten Maschinenteils zu schaffen, das zu einem einen Sensor aufweisenden, zweiten Maschinenteil beweglich ist, wobei die Anordnung eine hohe Genauigkeit der Positionsbestimmung auch unter ungünstigen Betriebsbedingungen wie Temperaturschwankungen und Verunreinigungen sicherstellt und die gleichzeitig einfach herstellbar und montierbar ist und ein Verfahren zu dessen Positionsbestimmung anzugeben.

### Lösung der Aufgabe

Die genannte Aufgabe wird erfingdungsgemäß bei einer Anordnung gemäß dem Oberbegriff des Anspruchs 1 dadurch gelöst, dass zwischen dem Sensor und dem ersten Maschinenteil ein auf den Sensor einwirkendes Federelement angeordnet ist. Dadurch dass das Federelement mittels Druckeinwirkung ein Signal im Sensor generiert, kann auf eine störempfindliche, berührungslose Messung mittels eines Hall-Sensors oder eines optischen Sensors verzichtet werden. Eine Verschmutzung des Federelements oder der Maschinenelemente kann die Messung nicht verfälschen, so dass die Anordnung auch bei widrigen Umgebungsbedingungen einsetzbar ist. Insbesondere verschlechtern in Öl dispergierte Metallpartikel das Detektionsverhalten nicht, so dass eine derartige Anordnung über ihre Lebensdauer auch in kritischen Umgebungen konstante und daher gute Messergebnisse liefert.

Der Sensor ist erfindungsgemäß als ein Drucksensor, beispielsweise als ein piezoelektrisches Element, ein kapazitiver Drucksensor oder ein frequenzanaloger Drucksensor, ausgebildet. Dabei ist es nicht erforderlich, dass das Federelement unmittelbar auf den Drucksensor einwirkt. Ebenfalls ist es möglich, ein Zwischenbauteil zwischen dem Ende des Federelements und dem Sensor vorzusehen. Das Zwischenbauteil kann als Druckplatte ausgebildet sein, um eine gleichmäßigere Belastung am Sensor zu erzielen.

In einer Ausgestaltung der Erfindung sind Federelemente mit einem linearen Kraft-Weg-Verlauf vorgesehen. Derartige Federelemente eignen sich besonders für Anordnungen, bei denen keine Bestimmung der Absolutposition relevant ist, sondern eine Feststellung der Relativverschiebung der Maschinenteile ausreichend ist. Der lineare Kraft-Weg-Verlauf ermöglicht in diesem Fall eine einfach differentielle Auswertung der Signale, indem zu zwei aufeinander folgenden Zeitpunkten zwei Messwerte bestimmt werden und deren Differenz betrachtet wird. Auf komplex aufgebaute Auswerteeinheiten kann somit verzichtet werden, da ungenaue Positionslagen, die Herstellungstoleranzen oder Einbautoleranzen geschuldet sind, in beiden Messwerten als Konstante enthalten sind und sich aufgrund des Differenzverfahrens automatisch herausmitteln. Aufgrund der Linearität kommt es auch auf die absolute Ausgangsposition des ersten Maschinenteils nicht an, da einer bestimmten Differenz immer die gleiche Streckenverschiebung entspricht. Im Gegensatz dazu ist bei Sensoren, die auf elektromagnetischen Effekten beruhen, die Stärke reziprok quadratisch zum Abstand des Senders und des Signalgebers. Bei solcherart nicht-linearen Kennlinien ist die genaue Kenntnis der Anfangsposition erforderlich, um den Verschiebeweg zu ermitteln, so dass ein derartiges System auf die exakte Ermittlung von Absolutpositionen angewiesen ist. Herstellungstoleranzen bedingen daher bei Anordnungen des Standes der Technik, dass jede Anordnung für sich kalibriert werden muss. Ferner haben Längenänderungen der Maschinenteile aufgrund von Temperaturschwankungen insbesondere im Nahbereich große Auswirkungen und können die Messung erheblich verfälschen.

Ein erfindungsgemäßer, linearer Kraft-Weg-Verlauf stellt sicher, dass Positionen im Nahbereich genauso sicher erkannt werden können wie im Fernbereich. Die Auflösung der Positionsbestimmung ist daher im Nahbereich ebenso gut wie im Fernbereich, was die Auswahl des Sensors vereinfacht.

In einer Weiterbildung der Erfindung weist die Anordnung eine Auswerteeinheit mit einem Speicher auf, in dem Messwerte von Referenzpositionen des ersten Maschinenteils zum Sensor oder Referenzverschiebungen abgelegt sind. Die Messwerte werden vorzugsweise nach dem Zusammenbau der Anordnung eingelernt und gespeichert. Sind aufgrund konstruktiver Gegebenheiten nur gewisse, diskrete Positionen des ersten Maschinenteils möglich, lässt sich bei dessen Bewegung die aktuelle Messwertänderung mit einer im Speicher abgelegten Referenztabelle vergleichen und eine Wahrscheinlichkeitsaussage treffen, welcher möglichen Position der Messwert am ehesten zuzuordnen ist. Alternativ spricht die Auswerteinheit nur bei Überschreiten gewisser Schwellwerte an, die sicherstellen, dass eine gewisse Mindestverschiebung erfolgt ist. Auf diese Weise können auch Sensoren in der Anordnung verwendet werden, die nur ein relativ grobes Auflösungsraster aufweisen. Eine derartige Anordnung gewährleistet auch bei sehr großen Toleranzen eine sichere Erkennung.

Sollen nicht nur diskrete Positionen des ersten Maschinenteils erkannt werden, sondern auch beliebige Absolutpositionen unter wechselnden Umgebungsbedingungen, lässt sich die Anordnung auf einfache Weise um zusätzliche Sensoren erweitern, die die Umgebungsbedingungen erfassen. Insbesondere in Verbindung mit einer Auswerteeinheit, die sowohl die Messwerte des Drucksensors als auch die eines Temperatursensors erfasst, lassen sich Längenänderungen des Maschinenteils aufgrund der spezifischen Wärmeausdehnung des Materials aus dem Signal des Drucksensors herausrechnen. Dazu ist in einem Speicher der Auswerteeinheit die Abstandsänderung des Maschinenteils zum Sensor in Abhängigkeit von der Temperatur für eine vorgegebene Stellung hinterlegt. Entspricht die gemessene Temperatur nicht der hinterlegten Temperatur, nimmt die Auswerteeinheit rechnerisch eine temperaturabhängige Längenkorrektur vor.

Besonders einfach kann die elektronische Schaltung in der Auswerteeinheit realisiert werden, wenn das erste Maschinenteil als eine Stange ausgebildet ist, die stirnseitig zum Sensor gerichtet ist. Aufgrund der Linearität der Längenänderung und der Linearität des Federelements ist beim Differenzmessverfahren beispielsweise keine nachträgliche Bearbeitung der gemessenen Werte erforderlich. Der Abgleich mit einem im Speicher hinterlegten Sollwert kann entfallen.

In einer Ausgestaltung ist vorgesehen, dass die Auswerteeinheit das Signal des Sensors in Abhängigkeit von weiteren Messgröße modifiziert wird und anhand der modifizierten Messgröße die Position ermittelt wird. Die anschließende Positionsermittlung kann direkt aus dem modifizierten Signal erfolgen. Alternativ erfolgt die Positionsermittlung durch Vergleich von mit einer Speichertabelle der Auswerteeinheit hinterlegten Werten.

Die Erfindung dient der Bestimmung der Positionen von Schaltschienen in Kraftfahrzeuggetrieben. Dazu ist die Schaltschiene in einem Gehäuse durch ein Lager, beispielsweise ein Gleitlager, aufgenommen. Bei einer Schaltschiene ist, beispielsweise im Rahmen eines Schaltvorgangs, im Allgemeinen nur eine längsverschiebliche Bewegung vorgesehen. Die Erfindung ist aber ebenso auf solche Schaltschienen anwendbar, die drehbar gelagert sind. Die axiale Position der Schaltschiene, insbesondere im Sinne einer Schaltposition und einer Neutralposition, lässt sich eindeutig und einfach anhand einer Verschiebung oder einer Position der Stirnfläche feststellen. Durch diese Anordnung des Sensors fokussiert der Sensor auf die Stirnfläche der Schaltschiene, so dass bei einer Bewegung der Schaltschiene sich diese mit ihrer Stirnfläche auf den Sensor zu bewegt, bzw. sich von diesem entfernt.

Die Schaltschiene bewegt sich bei einem Schaltvorgang zwischen zwei definierten Positionen, wobei die entsprechenden Positionen einer ersten Schaltposition und der Neutralposition bzw. einer zweiten Schaltposition der Schaltschiene entsprechen. Für die Bestimmung der Gangstellungen ist es im Prinzip nicht notwendig, jeweils die absolute Position der Schaltschiene zu bestimmen, sondern es ist ausreichend festzustellen, ob die Schaltschiene sich beispielsweise ausgehend von einem Ausgangs-oder Bezugspunkt auf den Sensor zu- oder wegbewegt. In Abhängigkeit von der Beeinflussung wird ein Sensorsignal, beispielsweise eine Spannung, erzeugt. Das entsprechende Sensorsignal kann dann daraufhin ausgewertet werden, ob sich die Schaltschiene auf den Sensor zu- oder gegebenenfalls wegbewegt. Zweckmäßigerweise wird dabei die Neutralposition, insbesondere das mit der Neutralposition korrelierte Sensorsignal, als Bezug gewählt, so dass aus dem abgegriffenen Sensorsignal ableitbar ist, ob sich die Schaltstange in der Neutralposition befindet, oder sich beispielsweise aus dieser wegbewegt. Ein derartiges Wegbewegen ist dann insbesondere mit dem Einlegen eines Ganges korreliert, das als "Schaltschiene ist in Schaltposition" auswertbar ist.

In einer Ausführungsform ist der Sensor innerhalb des Gehäuses angeordnet, und die Schaltschiene ist als eine kostengünstig kaltumgeformte Blechschiene ausgeführt. Alternativ kann die Schaltschiene auch als eine Schaltstange oder als eine Schaltwelle mit jeweils runden Querschnitten ausgebildet sein. In einem Getriebegehäuse eines Schaltgetriebes sind häufig mehrere Schaltschienen vorgesehen, welche parallel zueinander angeordnet sind. Die Schaltschienen können dabei sowohl aus einem Nicht-Metall wie Kunststoff als auch aus einem Metall gefertigt sein. Aufgrund des Federelements kann das Material der Schaltschiene das Detektionsverhalten des Sensors nicht beeinflussen, so dass bei der Materialwahl allein auf mechanische Erfordernisse abgestellt werden kann.

Vorzugsweise ist das Lager in einer Lagerhülse angeordnet und lagert das axiale Ende der Schaltschiene. Die Lagerhülse ist dabei vorzugsweise topfförmig mit einem Boden ausgebildet. Sie ist ein Teil des Gehäuses oder als ein separates Teil in dem Gehäuse angebracht. Dabei kann es vorgesehen sein, dass die Lagerhülse aus dem Getriebegehäuse eines Schaltgetriebes herausgeformt ist oder alternativ innerhalb des Getriebegehäuses in einen entsprechenden Aufnahmebereich eingesetzt ist. Die Lagerhülse erlaubt eine einfache Anbringung des Lagers in dem Gehäuse. Durch die Lagerung des axialen Endes wird auf einfache Weise eine stabile Linearführung der Schaltschiene ermöglicht. Der Sensor ist vorzugsweise am Boden der Lagerhülse angeordnet.

In einer weiteren Ausführungsform ist das Lager als Wälzlager ausgebildet. Es überträgt die eingeleiteten Kräfte besonders reibungsarm und ermöglicht ein gutes Schaltgefühl bei verschleißarmer Längsverschiebung der Schaltschiene. Das Wälzlager kann als Radial-Linear-Wälzlager ausgebildet sein. Dabei führt eine Verdrehung der Schaltschiene in Umfangsrichtung führt zu keiner messbaren Änderung des Federdrucks.

Eine erfindungsgemäße Anordnung nach Anspruch 8 ist besonders einfach in ihrer Herstellung. Die in der Regel als Einzelteile gefertigten Maschinenteile Schaltschiene und Federelement werden gegenüber dem Gehäuse, das das Lager und den Sensor aufweist, positioniert. Die Federkonstante des Federelements richtet sich nach dem Anwendungsfall und liegt je nach verwendetem Drucksensor in einer Größenordnung, dass die Schaltschiene je nach Position auf den Drucksensor eine Kraft von 1-3 Newton ausgeübt. Durch die ständige Vorspannung des Federelements ist einerseits sichergestellt, dass das Federelement verliersicher gehalten ist. Andererseits weist es in seinem Arbeitsbereich eine lineare Kraft-Weg-Kennlinie aufgrund ihrer von der Auslenkung unabhängigen Federkonstante auf. Als ein einfaches und robustes Federelement ist eine Schraubendruckfeder vorgesehen.. Die Feder muss nicht in aufwendiger Weise zugepaart werden. Vielmehr ist vorgesehen, nach dem Zusammenbau der Anordnung eine Kalibrierung erfolgt, um Einbautoleranzen und Streuungen bei dem Sensor und der Federkonstanten zu kompensieren. Dazu wird die Schaltschiene in einen oder mehrere definierte Zustände versetzt, die nicht nur die geometrische Lage, sondern auch Umgebungsgrößen wie die Temperatur erfassen. Die Zustandsgrößen werden dann in einer Auswerteeinheit gespeichert und stehen als Referenzwert für den Betrieb zur Verfügung.

### Kurze Beschreibung der Zeichnungen

Ein Ausführungsbeispiel der Erfindung wird anhand einer Zeichnung näher erläutert. Dabei zeigen:
- Fig.1: eine Darstellung einer erfindungsgemäßen Anordnung und
- Fig. 2: eine schematische Darstellung einer erfindungsgemäßen Anordnung und

### Ausführliche Beschreibung der Zeichnungen

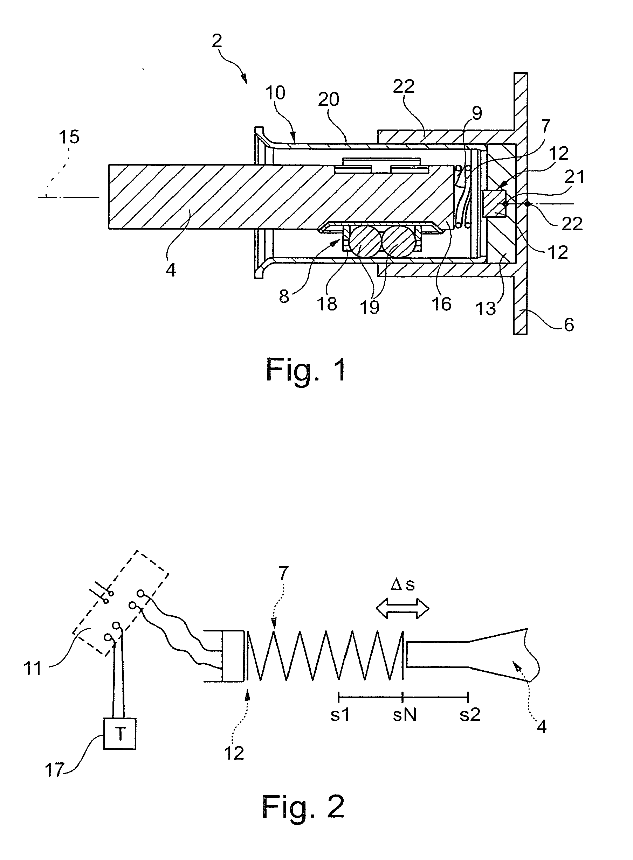

Die Figuren 1 und 2 zeigen eine Anordnung 2 zur Lagerung eines ersten Maschinenelements 1. Die Anordnung 2 ist Teil eines nicht weiter dargestellten Schaltgetriebes eines Kraftfahrzeugs. Sie umfasst eine Schaltschiene 4 als ein erstes Maschinenelement 3 und ein Gehäuse 6 als ein zweites Maschinenelement 5 sowie ein Lager 8, das in einer im Gehäuse 6 angeordneten Lagerhülse 10 aufgenommen ist. Die Lagerhülse 10 ist topfförmig ausgebildet und weist einen in Richtung der Schaltschiene 4 orientierten Boden 13 auf.

Die Schaltschiene 4 ist mit einem axialen Ende 16 in dem als Wälzlager 18 ausgeführten Lager 8 gelagert. Das in Fig. 1 nicht sichtbare zweite axiale Ende der Schaltschiene 4 ist in einem weiteren Wälzlager gelagert. Das Wälzlager 18 ist in der Lagerhülse 10 aufgenommen, wobei die Wälzkörper 19 des Radial-Linear-Wälzlagers 18 auf der inneren Mantelfläche der Lagerhülse 10 laufen. Aus der Querschnittsdarstellung wird die beidseits der Längsachse 15 symmetrische Anordnung der Wälzkörper 19 nicht ersichtlich. Um eine verschleißfeste Lauffläche für die Wälzkörper 19 zu realisieren, ist der Mantel 20 der Lagerhülse 10 aus einem hochfesten Stahl gefertigt. Die Lagerhülse 10 selbst ist in einen zylindrischen Gehäuseabschnitt 14 des Gehäuses 6 eingesetzt.

Stirnseitig in Richtung der Schaltschiene 4 orientiert ist ein Sensor 12 am Boden 13 der Lagerhülse 10 angeordnet. Er ist in Richtung der Stirnfläche 9 des axialen Endes 16 der Schaltschiene 4 gegenüberliegend angeordnet. Zwischen der Stirnfläche 9 der Schaltschiene 4 und dem Sensor 12 ist ein Federelement 7, das als Schraubendruckfeder ausgebildet ist, angeordnet. Der Sensor 12 und das Federelement 7 sind beide im Wesentlichen entlang der Längsachse 15 der Schaltschiene 4 angeordnet. Der Montageprozess ist einfach, da es aufgrund eines anschließenden Kalibrierprozesses auf die exakte Einbaulage des Sensors 12 und der Schaltschiene 4 nicht ankommt. Bei dem Montageprozess wird einfach der Boden 13 der Lagerhülse 10 mit dem darin befindlichen Sensor 12 in den zylindrischen Gehäuseabschnitt 14 eingefügt. Auf den Boden 26 wird der Mantel 20 der Lagerhülse 10 aufgepresst, in welchen dann das Wälzlager 18 und die Schaltschiene 4 mit dem Federelement 7 eingeführt wird.

Bei einem Schaltvorgang wird die Schaltschiene 4 entlang ihrer Längsachse 15 zwischen drei axial benachbarten Positionen s₁, sₙ, s₂ verschoben. Dabei entspricht die mittlere Position der Neutralposition sₙ, und die beiden anderen Positionen s₁, s₂ sind Schaltpositionen und sind jeweils einem Gang zugeordnet. Gleichzeitig mit der Schaltschiene 4 wird ein daran befestigter, in der Darstellung nicht sichtbarer Schaltfinger zwischen diesen Positionen verschoben. Zum Schalten eines Ganges wird die Schaltschiene 4 in dem Schaltgetriebe aus der Neutralposition sₙ heraus in die Schaltposition bewegt. Dabei erfolgt über den Schaltfinger und über eine daran befestigte Schaltmuffe die Schaltung des zur Bildung der entsprechenden Übersetzungsstufe erforderlichen Zahnradsatzes.

Mittels des Sensors 12 ist eine Bestimmung der axialen Position der Schaltschiene 4 möglich. Dazu ist der Sensor 12 als ein Piezoelement ausgeführt. Das erzeugte Sensorsignal wird von einem Signalnehmer 21 abgegriffen und über einen Signalausgang 22 zu einer Auswerteeinheit 11 des Schaltgetriebes des Kraftfahrzeugs geleitet wird.

Der mit der Neutralposition s₁, sₙ, s₂ der Schaltschiene 4 korrelierte Messwert wird als Bezug gewählt, so dass die Anordnung bezüglich der Neutralposition kalibriert wird. Wenn sich die Schaltschiene 4 im Rahmen eines Schaltvorgangs aus ihrer Neutralposition sₙ, heraus in eine Schaltposition s₁, s₂ bewegt, dann steigt bzw. sinkt der von dem Federelement 7 ausgeübte Druck auf den Sensor 12. Das entsprechende Spannungssignal wird von dem Signalnehmer 21 abgegriffen und wird über den Signalausgang 22 an die Auswerteeinheit 11 übermittelt.

**Liste der Bezugszahlen**

| | |
|---|---|
| 1 | (nicht vergeben) |
| 2 | Anordnung |
| 3 | erstes Maschinenteil |
| 4 | Schaltschiene |
| 5 | zweites Maschinenteil |
| 6 | Gehäuse |
| 7 | Federelement |
| 8 | Lager |
| 9 | Stirnfläche |
| 10 | Lagerhülse |
| 11 | Auswerteeinheit |
| 12 | Sensor |
| 13 | Boden |
| 14 | Gehäuseabschnitt |
| 15 | Längsachse |
| 16 | axiales Ende |
| 17 | weiterer Sensor |
| 18 | Radial-Linear-Wälzlager |
| 19 | Wälzkörper |
| 20 | Mantel |
| 21 | Signalnehmer |
| 22 | Signalausgang |
| | |
| l | Langsrichtung |
| s₁ | erste Schaltstellung |
| sₙ | Neutralstellung |
| s₂ | zweite Schaltstellung |

## Patentansprüche

1. Anordnung (2) für ein Zahnräderwechselgetriebe zur Bestimmung der Position eines ersten Maschinenteils (3, 4) zu einem zweiten Maschinenteil (5, 6), wobei das erste Maschinenteil (3, 4) zu dem zweiten Maschinenteil (5, 6) beweglich ist und wobei am zweiten Maschinenteil (5, 6) ein Sensor (12) angeordnet ist, wobei zwischen dem Sensor (12) und dem ersten Maschinenteil (3, 4) ein auf den Sensor (12) einwirkendes Federelement (7) angeordnet ist, **dadurch gekennzeichnet, dass** die Anordnung (2) als eine Schaltschiene (4) erstes Maschinenteil (3), ein Gehäuse (6) als zweites Maschinenteil (5) und ein von dem Gehäuse (6) aufgenommenes Lager (8) zur längsverschieblichen Lagerung der Schaltschiene (4) in dem Gehäuse (6) aufweist, wobei ein Sensor (12) zur Bestimmung der Position der Schaltschiene (4) an dem Gehäuse (6) angeordnet ist, der der Stirnfläche (9) eines axialen Endes (16) der Schaltschiene (4) zugewandt ist, und dass zwischen dem Sensor (12) und dem axialen Ende (16) das Federelement (7) angeordnet ist.

2. Anordnung nach Anspruch 1, **dadurch gekennzeichnet, dass** das Federelement (7) eine lineare Kraft-Weg-Kennlinie aufweist.

3. Anordnung (2) Anspruch 1, **dadurch gekennzeichnet, dass** der Sensor (12) als ein Piezoelement ausgebildet ist.

4. Anordnung nach Anspruch 1, **dadurch gekennzeichnet, dass** das erste Maschinenteil (3, 4) als Stange ausgebildet ist, welche in ihrer Längsrichtung (l) verschiebbar ist.

5. Anordnung (2) nach Anspruch 1, **dadurch gekennzeichnet, dass** das Lager (8) in einer Lagerhülse (10) angeordnet ist und das axiale Ende (16) der Schaltschiene (4) lagert.

6. Anordnung (2) nach Anspruch 1, **dadurch gekennzeichnet, dass** der Sensor (12) am Boden (13) der Lagerhülse (10) angeordnet ist.

7. Anordnung (2) nach Anspruch 1, **dadurch gekennzeichnet, dass** das Lager (8) in der Lagerhülse (10) als ein Radial-Linear-Wälzlager (18) ausgebildet ist.

8. Anordnung nach Anspruch 1, **dadurch gekennzeichnet, dass** das Federelement (7) so auf Schaltstellungen (s₁, sₙ, s₂) der Schaltschiene (4) abgestimmt ist, dass es beim Schalten zwischen den möglichen Schaltstellungen (s₁, sₙ, s₂) eine lineare Kennlinie aufweist.

9. Anordnung nach Anspruch 8, **dadurch gekennzeichnet, dass** das Federelement (7) als Schraubendruckfeder ausgebildet ist.

10. Verfahren zur Bestimmung von Positionen einer Schaltschiene (4) einer Anordnung (2) nach Anspruch 8, **dadurch gekennzeichnet, dass** einer Auswerteeinheit (11) das Signal des Sensors (12) und ein durch einen weiteren Sensor (17) ermitteltes Temperatursignal zugeführt wird, dass die Auswerteeinheit (11) ein Gangerkennungssignal generiert, das aus dem Signal des Sensors (12) in Abhängigkeit von dem Temperatursignal erzeugt wird.

11. Verfahren zur Herstellung einer Anordnung (2) nach Anspruch 8, **dadurch gekennzeichnet, dass** nach dem Zusammenbau der Einzelteile (3, 5, 7, 12) zur Anordnung (2) eine Kalibrierung zur Kompensation von Einbautoleranzen erfolgt, indem zumindest zwei definierte Gangstellungen in einer Auswerteeinheit (11) gespeichert werden.

## Claims

1. Arrangement (2) for a variable-speed transmission for determining the position of a first machine component (3, 4) with respect to a second machine component (5, 6), wherein the first machine component (3, 4) is movable with respect to the second machine component (5, 6), and wherein a sensor (12) is arranged on the second machine component (5, 6), wherein a spring element (7) which acts on the sensor (12) is arranged between the sensor (12) and the first machine component (3, 4), **characterized in that** the arrangement (2) has a first machine component (3) as a shift rail (4), a housing (6) as a second machine component (5) and a bearing (8) which is accommodated by the housing (6) and has the purpose of displacing the shift rail (4) longitudinally in the housing (6), wherein a sensor (12) for determining the position of the shift rail (4) is arranged on the housing (6) and faces the end face (9) of an axial end (16) of the shift rail (4), and **in that** the spring element (7) is arranged between the sensor (12) and the axial end (16).

2. Arrangement according to Claim 1, **characterized in that** the spring element (7) has a linear force/travel characteristic curve.

3. Arrangement (2) according to Claim 1, **characterized in that** the sensor (12) is embodied as a piezo element.

4. Arrangement according to Claim 1, **characterized in that** the first machine component (3, 4) is embodied as a rod which can be displaced in its longitudinal direction (I).

5. Arrangement (2) according to Claim 1, **characterized in that** the bearing (8) is arranged in a bearing sleeve (10) and supports the axial end (16) of the shift rail (4).

6. Arrangement (2) according to Claim 1, **characterized in that** the sensor (12) is arranged on the base (13) of the bearing sleeve (10).

7. Arrangement (2) according to Claim 1, **characterized in that** the bearing (8) in the bearing sleeve (10) is embodied as a radial linear roller bearing (18).

8. Arrangement according to Claim 1, **characterized in that** the spring element (7) is matched to shift positions (s₁, sₙ, s₂) of the shift rail (4) in such a way that during shifting it has a linear characteristic curve between the possible shift positions (s₁, sₙ, s₂).

9. Arrangement according to Claim 8, **characterized in that** the spring element (7) is embodied as a helical compression spring.

10. Method for determining positions of a shift rail (4) of an arrangement (2) according to Claim 8, **characterized in that** the signal of the sensor (12) and a temperature signal which is determined by a further sensor (17) are fed to an evaluation unit (11), **in that** the evaluation unit (11) generates a gearspeed detection signal which is generated from the signal of the sensor (12) as a function of the temperature signal.

11. Method for manufacturing an arrangement (2) according to Claim 8, **characterized in that** after the assembly of the individual components (3, 4, 7, 12) for the arrangement (2), a calibration is carried out for the purpose of compensation of installation tolerances by storing at least two defined gearspeed positions in an evaluation unit (11).

## Revendications

1. Agencement (2) pour une boîte de vitesses à engrenages pour déterminer la position d'une première partie de machine (3, 4) par rapport à une deuxième partie de machine (5, 6), la première partie de machine (3, 4) étant déplaçable par rapport à la deuxième partie de machine (5, 6) et un capteur (12) étant disposé sur la deuxième partie de machine (5, 6), entre le capteur (12) et la première partie de machine (3, 4) étant disposé un élément de ressort (7) agissant sur le capteur (12), **caractérisé en ce que** l'agencement (2) présente, en tant que tige de commande (4) de la première partie de machine (3), un boîtier (6) en tant que deuxième partie de machine (5) et un palier (8) reçu par le boîtier (6) pour le support sur palier déplaçable en longueur de la tige de commande (4) dans le boîtier (6), un capteur (12) pour déterminer la position de la tige de commande (4) étant disposé sur le boîtier (6), lequel est tourné vers la surface frontale (9) d'une extrémité axiale (16) de la tige de commande (4) et **en ce que** l'élément de ressort (7) est disposé entre le capteur (12) et l'extrémité axiale (16).

2. Agencement selon la revendication 1, **caractérisé en ce que** l'élément de ressort (7) présente une caractéristique force-distance linéaire.

3. Agencement (2) selon la revendication 1, **caractérisé en ce que** le capteur (12) est réalisé sous forme d'élément piézoélectrique.

4. Agencement selon la revendication 1, **caractérisé en ce que** la première partie de machine (3, 4) est réalisée sous forme de tige qui peut être déplacée dans sa direction longitudinale (1).

5. Agencement (2) selon la revendication 1, **caractérisé en ce que** le palier (8) est disposé dans une douille de palier (10) et supporte l'extrémité axiale (16) de la tige de commande (4).

6. Agencement (2) selon la revendication 1, **caractérisé en ce que** le capteur (12) est disposé sur le fond (13) de la douille de palier (10).

7. Agencement (2) selon la revendication 1, **caractérisé en ce que** le palier (8) est réalisé dans la douille de palier (10) sous forme de palier à roulement radial linéaire (18).

8. Agencement selon la revendication 1, **caractérisé en ce que** l'élément de ressort (7) est adapté à des positions de commutation (s₁, sₙ, s₂) de la tige de commande (4) de telle sorte qu'il présente, lors de la commutation entre les positions de commutation (s₁, sₙ, s₂) possibles, une caractéristique linéaire.

9. Agencement selon la revendication 8, **caractérisé en ce que** l'élément de ressort (7) est réalisé sous forme de ressort de compression à boudin.

10. Procédé pour déterminer des positions d'une tige de commande (4) d'un agencement (2) selon la revendication 8, **caractérisé en ce que** le signal du capteur (12) et un signal de température émis par un autre capteur (17) sont acheminés à une unité d'analyse (11), et **en ce que** l'unité d'analyse (11) génère un signal de reconnaissance de rapport qui est produit à partir du signal du capteur (12) en fonction du signal de température.

11. Procédé de fabrication d'un agencement (2) selon la revendication 8, **caractérisé en ce qu**'après l'assemblage des pièces individuelles (3, 5, 7, 12) pour former l'agencement (2), un calibrage pour compenser les tolérances d'installation est réalisé, en mémorisant au moins deux positions de rapport définies dans une unité d'analyse (11).
